(19)

Europäisches
Patentamt
European
Patent Office
Office européen
des brevets

(11) **EP 4 317 269 A1**

(12) **EUROPEAN PATENT APPLICATION**
published in accordance with Art. 153(4) EPC

(43) Date of publication:
**07.02.2024 Bulletin 2024/06**

(21) Application number: **22779420.3**

(22) Date of filing: **20.01.2022**

(51) International Patent Classification (IPC):
*C08J 5/18* [(2006.01)]   *B29C 55/14* [(2006.01)]
*B29K 23/00* [(2006.01)]   *B29L 7/00* [(2006.01)]

(52) Cooperative Patent Classification (CPC):
**B29C 55/14; C08J 5/18;** B29K 2023/00;
B29L 2007/00

(86) International application number:
**PCT/JP2022/002029**

(87) International publication number:
**WO 2022/209190 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021 JP 2021057873**

(71) Applicant: **Sumitomo Chemical Company, Limited
Tokyo 103-6020 (JP)**

(72) Inventors:
• **INOUE, Nao
  Ichihara-shi, Chiba 299-0195 (JP)**
• **KANESAKA, Sho
  Ichihara-shi, Chiba 299-0195 (JP)**
• **KUWASAKI, Naoto
  Ichihara-shi, Chiba 299-0195 (JP)**
• **TAKANO, Masaki
  Ichihara-shi, Chiba 299-0195 (JP)**

(74) Representative: **Vossius & Partner
Patentanwälte Rechtsanwälte mbB
Siebertstrasse 3
81675 München (DE)**

(54) **FILM, METHOD FOR PRODUCING FILM, AND PROPYLENE-BASED POLYMER COMPOSITION**

(57) An object is to provide a film having a relatively high tensile modulus of elasticity (Young's modulus) in both a MD direction and a TD direction, having a relatively low heat shrinkage rate in the TD direction, and having relatively excellent uniform stretchability in the TD direction during production. The film contains a propylene-based polymer or a propylene-based polymer composition and satisfies an inequality (I) below and the like.
$-0.35 < BO^{MD} - BO^{TD} < 1.00$ (I) $-0.35 < BO^{MD} - BO^{TD} < 1.00$ (I) (In the inequality, $BO^{MD}$ represents a degree of orientation in a MD direction of the film measured using a birefringence method, and $BO^{TD}$ represents a degree of orientation in a TD direction of the film measured using the birefringence method.)

**EP 4 317 269 A1**

**Description**

TECHNICAL FIELD

The present invention relates to a film containing a propylene-based polymer, a method for producing a film, and a propylene-based polymer composition.

BACKGROUND ART

A conventionally known film used for, for example, various packaging materials is a film that has a structure including, as a base film, a polyethylene terephthalate (PET)-based biaxially stretched film and, as a sealant film, a polypropylene (PP)-based unstretched film or a polyethylene (PE)-based unstretched film stacked on the base film. The film having such a structure can exhibit an excellent function as various packaging bags by the base film having high toughness and high heat resistance and the sealant film having low-temperature heat-sealing properties.

Recently, a requirement of recycling this type of film is increasing, and production thereof from a mono-material is expected. Specifically, suitably used as the base film is a polypropylene-based biaxially stretched film that is the same type of olefin-based resin as an olefin-based resin, such as polypropylene and polyethylene, forming the sealant film.

The polypropylene-based biaxially stretched film, however, has a low tensile modulus of elasticity (Young's modulus) compared to that of a polyethylene terephthalate-based biaxially stretched film and the like. Therefore, a problem with the film including a polypropylene-based biaxially stretched film as the base film is that the use thereof is limited.

Patent Document 1 proposes, as a polypropylene-based biaxially stretched film having an improved tensile modulus of elasticity (Young's modulus), a biaxially stretched film formed using a propylene-based polymer composition containing a propylene-based polymer and a β-crystal nucleating agent.

PRIOR ART DOCUMENT

PATENT DOCUMENT

Patent Document 1: JP-A-2016-199686

SUMMARY OF THE INVENTION

PROBLEMS TO BE SOLVED BY THE INVENTION

The biaxially stretched film described in Patent Document 1, however, cannot be said to have good high-temperature dimensional stability in a direction (hereinafter, also described as a "TD direction") intersecting the flow direction (hereinafter, also described as a "MD direction") during production. Another problem with the biaxially stretched film described in Patent Document 1 is that because it is difficult to uniformly stretch the film in the TD direction during production, the film sometimes causes uneven thickness and breakage and thus has bad stretch processability.

Therefore, an object of the present invention is to provide a film having a relatively high tensile modulus of elasticity (Young's modulus) in both a MD direction and a TD direction, having relatively excellent high-temperature dimensional stability in the TD direction, and having relatively excellent uniform stretchability in the TD direction during production. Another object is to provide a method for producing this film, and a propylene-based polymer composition used for producing this film.

MEANS FOR SOLVING THE PROBLEMS

A film according to the present invention contains a propylene-based polymer or a propylene-based polymer composition and satisfies requirements (1) to (3) below.

    (1) The film satisfies an inequality (I) below.

$$-0.35 < BO^{MD} - BO^{TD} < 1.00 \quad (I)$$

    (In the inequality,

BO$^{MD}$ represents a degree of orientation in a MD direction of the film measured using a birefringence method, and BO$^{TD}$ represents a degree of orientation in a TD direction of the film measured using the birefringence method.)

(2) The film satisfies an inequality (II) below.

$$I_{0.2}{}^{MD}/I_{0.6}{}^{TD} < 1.5 \quad (II)$$

(In the inequality,
$I_{0.2}{}^{MD}$ represents an intensity at a position of a scattering vector q of 0.2 nm$^{-1}$ in a Kratky plot in the MD direction of the film measured using a small-angle X-ray scattering method, and
$I_{0.6}{}^{TD}$ represents an intensity at a position of a scattering vector q of 0.6 nm$^{-1}$ in a Kratky plot in the TD direction of the film measured using the small-angle X-ray scattering method.)

(3) The film satisfies an inequality (III) below.

$$I_{0.2}{}^{TD}/I_{0.6}{}^{MD} < 1.5 \quad (III)$$

(In the inequality,
$I_{0.2}{}^{TD}$ represents an intensity at a position of the scattering vector q of 0.2 nm$^{-1}$ in the Kratky plot in the TD direction of the film measured using the small-angle X-ray scattering method, and
$I_{0.6}{}^{MD}$ represents an intensity at a position of the scattering vector q of 0.6 nm$^{-1}$ in the Kratky plot in the MD direction of the film measured using the small-angle X-ray scattering method.)

A method, according to the present invention, for producing a film includes:

an extruding step of, with an extruder, heat-melting and extruding onto a cooling roll a propylene-based polymer composition containing a propylene-based polymer and at least one stretchability improving agent selected from the group consisting of a β-crystal nucleating agent and a hydrocarbon resin, to give an unstretched sheet;
a MD stretching step of stretching the unstretched sheet obtained, with a stretching roll, by 6 times to 10 times in a MD direction to give a uniaxially stretched sheet;
a TD stretching step of stretching the uniaxially stretched sheet obtained, with chucks arranged in two rows along the MD direction, in a heating furnace, by 4 times to 20 times in a TD direction to give a biaxially stretched film; and
a relaxing step of relaxing a stretch in the TD direction of the biaxially stretched film obtained, with the chucks arranged in two rows along the MD direction, in the heating furnace, by 16% to 30% in the TD direction.

A propylene-based polymer composition according to the present invention

contains a propylene-based polymer and a stretchability improving agent and
satisfies requirements (11) to (16) below.

(11) A melt flow rate measured at a temperature of 230°C and a load of 2.16 kg is 1 g/10 min to 10 g/10 min.
(12) A die swell ratio measured at a temperature of 230°C and a load of 2.16 kg is 1.23 to 1.45.
(13) A ratio (Mw/Mn) between a weight average molecular weight (Mw) and a number average molecular weight (Mn) measured by gel permeation chromatography is 4.0 to 7.0.
(14) A ratio (Mz/Mn) between a Z-average molecular weight (Mz) and the number average molecular weight (Mn) measured by the gel permeation chromatography is 10.0 to 25.0.
(15) An amount of a component having a molecular weight measured by the gel permeation chromatography of 100000 or less is 30 mass% to 50 mass%.
(16) An amount of a component having a molecular weight measured by the gel permeation chromatography of 1500000 or more is 2.3 mass% to 5.0 mass%.

EFFECT OF THE INVENTION

The present invention can provide a film having a relatively high tensile modulus of elasticity (Young's modulus) in both a MD direction and a TD direction, having relatively excellent high-temperature dimensional stability in the TD direction, and having relatively excellent uniform stretchability in the TD direction during production. The present invention can also provide a method for producing this film, and a propylene-based polymer composition used for producing this film.

MODE FOR CARRYING OUT THE INVENTION

A film (specifically, a biaxially stretched film) according to the present embodiment contains a propylene-based polymer or a propylene-based polymer composition.

The propylene-based polymer is a polymer containing more than 50 mass% of a monomer unit derived from propylene. For example, the propylene-based polymer may be a propylene homopolymer or a propylene-based copolymer. From the viewpoint of the heat shrinkage rate and the toughness of the biaxially stretched film, the propylene-based polymer is preferably a propylene homopolymer. Examples of the propylene-based copolymer include a copolymer obtained by copolymerizing propylene and at least one comonomer selected from ethylene or an $\alpha$-olefin having 4 to 20 carbon atoms.

Examples of the $\alpha$-olefin having 4 to 20 carbon atoms include 1-butene, 2-methyl-1-propene, 1-pentene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene, and 1-dodecene. The $\alpha$-olefin is preferably 1-butene, 1-pentene, 1-hexene, or 1-octene, more preferably 1-butene.

Examples of the propylene-based copolymer include a propylene-ethylene copolymer and a propylene-$\alpha$-olefin copolymer. Examples of the propylene-$\alpha$-olefin copolymer include a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer. The propylene-$\alpha$-olefin copolymer is preferably a propylene-ethylene copolymer, a propylene-1-butene copolymer, or a propylene-ethylene-1-butene copolymer.

When the propylene-based copolymer is a propylene-ethylene copolymer, the content of ethylene is preferably 2.0 mass% or less, more preferably 1.0 mass% or less, further preferably 0.4 mass% or less, from the viewpoint of the heat shrinkage rate and the toughness of the biaxially stretched film.

When the propylene-based copolymer is a propylene-$\alpha$-olefin copolymer, the content of an $\alpha$-olefin is preferably 8.0 mass% or less, more preferably 3.0 mass% or less, further preferably 1.0 mass% or less, from the viewpoint of the heat shrinkage rate and the toughness of the biaxially stretched film.

When the propylene-based copolymer is a propylene-ethylene-$\alpha$-olefin copolymer, the total content of ethylene and an $\alpha$-olefin is preferably 8.0 mass% or less, more preferably 3.0 mass% or less, further preferably 1.0 mass% or less, from the viewpoint of the heat shrinkage rate and the toughness of the biaxially stretched film.

The amount of a cold xylene-soluble fraction (hereinafter, abbreviated as CXS) of the propylene-based polymer is preferably 2.0 mass% or less, more preferably 0.1 mass% to 1.0 mass%, further preferably 0.3 mass% to 1.0 mass%. The effects by setting the CXS to the above range are that good stretch processability is exhibited during production of the biaxially stretched film, and the biaxially stretched film exerts high toughness and an excellent high-temperature shrinkage rate. The CXS of the propylene-based polymer can be adjusted to the above range, for example, by selecting the type of an external donor used in the polymerization of propylene. Specific examples of the external donor include cyclohexylethyldimethoxysilane, dicyclopentyldimethoxysilane, and di-tert-butyldimethoxysilane. The CXS can be obtained by the method described in EXAMPLES described later.

The melt flow rate (hereinafter, abbreviated as MFR) of the propylene-based polymer is preferably 1 g/10 min to 50 g/10 min, more preferably 1 g/10 min to 20 g/10 min, further preferably 2 g/10 min to 15 g/10 min. The effects by using the propylene-based polymer having an MFR in the above range are that with molten polypropylene having appropriate viscosity, good stretch processability is exhibited during production of the biaxially stretched film, and the biaxially stretched film exerts high toughness and an excellent high-temperature shrinkage rate. The MFR of the propylene-based polymer can be changed, for example, by adjusting the concentration of hydrogen used in the polymerization of propylene. The MFR can be obtained by the method described in EXAMPLES described later.

The propylene-based polymer composition may contain one propylene-based polymer and a component other than the propylene-based polymer, or may contain at least two propylene-based polymers. The content of the propylene-based polymer(s) in the propylene-based polymer composition is preferably 80 mass% to 99.9 mass%, more preferably 90 mass% to 99.9 mass%, further preferably 99 mass% to 99.9 mass%. The propylene-based polymer composition may contain, for example, a plurality of propylene-based polymers having different MFRs. Preferable examples thereof include a propylene-based polymer composition containing a propylene-based polymer (a) having an MFR of 4 g/10 min or less and a propylene-based polymer (b) having an MFR of 20 g/10 min to 500 g/10 min.

As to the content of the propylene-based polymers (a) and (b) in the propylene-based polymer composition, it is preferred that the content of the propylene-based polymer (a) is 50 mass% to 90 mass% and the content of the propylene-based polymer (b) is 10 mass% to 50 mass%, relative to the total content of the propylene-based polymers (a) and (b), and it is more preferred that the content of the propylene-based polymer (a) is 50 mass% to 85 mass% and the content of the propylene-based polymer (b) is 15 mass% to 50 mass%. The effects by using the propylene-based polymer composition that contains a plurality of propylene-based polymers having different MFRs are that uneven thickness generated during stretch processing in production of the biaxially stretched film is reduced, good stretch processability is exhibited, and the biaxially stretched film exerts high toughness and an excellent high-temperature shrinkage rate.

The amount of a cold xylene-soluble fraction (CXS) of the propylene-based polymer composition is preferably 2.0 mass% or less, more preferably 0.1 mass% to 1.0 mass%, further preferably 0.3 mass% to 1.0 mass%. The effects by setting the CXS to the above range are that good stretch processability is exhibited during production of the biaxially stretched film, and the biaxially stretched film exerts high toughness and an excellent high-temperature shrinkage rate. The CXS can be obtained by the method described in EXAMPLES described later.

Examples of a method for producing the propylene-based polymer composition containing at least two propylene-based polymers include a method for separately producing at least two propylene-based polymers and mixing the obtained propylene-based polymers to form a propylene-based polymer composition. Examples of a method for separately producing at least two propylene-based polymers include a known polymerization method. Examples thereof include a solvent polymerization method performed in the presence of an inert solvent, a bulk polymerization method performed in the presence of a liquid monomer, and a vapor phase polymerization method performed substantially in non-presence of a liquid medium. The separately producing method is preferably a vapor phase polymerization method. Other examples of the method for producing the propylene-based polymer composition containing at least two propylene-based polymers include a polymerization method for combining two or more of the polymerization methods described above, and a method (multi-stage polymerization method) for performing a plurality of polymerization steps by stages.

As a method for mixing at least two propylene-based polymers separately produced, any method may be employed as long as the method uniformly disperses these polymers. Examples thereof include: a method for mixing at least two propylene-based polymers with a ribbon blender, a Henschel mixer, a tumbler mixer, or the like, and melt-kneading the mixture with an extruder or the like; a method for separately melt-kneading and pelletizing at least two propylene-based polymers, mixing the pelletized products by the same method as described above, and further melt-kneading the mixture; a method for separately melt-kneading and pelletizing at least two propylene-based polymers, blending the pelletized products by dry blending or the like, and then directly mixing the blended mixture with a film processor; and a method for separately melt-kneading and pelletizing at least two propylene-based polymers, and mixing the pelletized products by feeding them separately to an extruder of a film processor. Other examples thereof include a method for preparing in advance masterbatch containing 100 parts by mass of one propylene-based polymer and 1 to 99 parts by mass of the other propylene-based polymer relative thereto, and mixing as appropriate the masterbatch to achieve a prescribed concentration.

When the at least two propylene-based polymers separately produced are mixed, a stabilizer, a lubricant, an antistatic agent, an antiblocking agent, various inorganic or organic fillers, or the like may be added.

As a catalyst used in polymerization for each of the at least two propylene-based polymers, a catalyst for stereospecific polymerization of propylene is used in both the cases where these polymers are obtained through separate polymerization and the cases where a multi-stage polymerization method is used.

Examples of the catalyst for stereospecific polymerization of propylene include: a titanium(III) chloride catalyst; a catalyst system obtained by combining a solid catalyst component such as a Ti-Mg-based catalyst containing as essential components titanium, magnesium, halogen, and an electron donor, with an organic aluminum compound and a third component, such as an electron-donating compound, added as necessary; and a metallocene-based catalyst.

The catalyst for stereospecific polymerization of propylene is preferably a catalyst system obtained by combining a solid catalyst component containing as essential components magnesium, titanium, halogen, and an electron donor, with an organic aluminum compound and an electron-donating compound. Specific examples include catalyst systems described in JP-A-61-218606, JP-A-61-287904, JP-A-7-216017, JP-A-2004-182876, and the like.

A propylene-based polymer composition according to the present embodiment contains a stretchability improving agent in addition to the propylene-based polymer described above. Examples of the stretchability improving agent include at least one selected from the group consisting of a β-crystal nucleating agent and a hydrocarbon resin.

The β-crystal nucleating agent is a compound capable of forming a β-crystal having a hexagonal crystal structure in the propylene-based polymer. The β-crystal nucleating agent is not particularly limited, and various conventionally known β-crystal nucleating agents can be used. Examples thereof include: amide compounds represented by N,N'-dicyclohexyl-2,6-naphthalenedicarboxyamide, N,N'-dicyclohexylterephthalamide, N,N'-diphenylhexanediamide, and the like; quinacridones represented by a tetraoxaspiro compound, quinacridone, quinacridonequinone, and the like; nano-scale size iron oxide; alkali or alkaline earth metal salts of carboxylic acids represented by calcium pimelate, potassium 1,2-hydroxystearate, magnesium benzoate, magnesium succinate, magnesium phthalate, and the like; aromatic sulfonic acid compounds represented by sodium benzenesulfonate and sodium naphthalenesulfonate; diesters and triesters of dibasic and tribasic carboxylic acids; phthalocyanine-based pigments represented by phthalocyanine blue and the like;

a two-component compound containing, as a component A, an organic dibasic acid and, as a component B, an oxide, hydroxide, or salt of a metal in group IIA in the periodic table; and a composition containing a cyclic phosphorus compound and a magnesium compound. These β-crystal nucleating agents may be used singly or as a mixture of two or more thereof. Among the β-crystal nucleating agents described above, amide compounds such as N,N'-dicyclohexyl-2,6-naphthalenedicarboxyamide, N,N-dicyclohexylterephthalamide, and N,N'-diphenylhexanediamide are preferable, and N,N'-dicyclohexyl-2,6-naphthalenedicarboxyamide is more preferable.

Examples of the hydrocarbon resin include a cyclopentadiene-based resin containing a petroleum-based unsaturated hydrocarbon as a raw material, and a resin containing a higher olefin-based hydrocarbon as a main raw material.

The propylene-based polymer composition satisfies requirements (11) to (16) below.

(11) An MFR measured at a temperature of 230°C and a load of 2.16 kg is 1 g/10 min to 10 g/10 min, preferably 2 g/10 min to 6 g/10 min, more preferably 2 g/10 min to 4 g/10 min.

The MFR can be changed, for example, by adjusting the concentration of hydrogen used in the polymerization of polypropylene. The MFR can be obtained by the method described in EXAMPLES described later.

(12) A die swell ratio measured at a temperature of 230°C and a load of 2.16 kg is 1.23 to 1.45, preferably 1.23 to 1.40, more preferably 1.28 to 1.38.

The numerical value of the die swell ratio can be changed, for example, by mixing a plurality of propylene-based polymers having different MFRs, and thus adjusting the molecular weight and the molecular weight distribution of the propylene-based polymer composition. The die swell ratio can be obtained by the method described in EXAMPLES described later.

(13) A ratio (Mw/Mn) between a weight average molecular weight (Mw) and a number average molecular weight (Mn) measured by gel permeation chromatography (hereinafter, described as GPC) is 4.0 to 7.0, preferably 4.0 to 6.0, more preferably 4.0 to 5.5.

The numerical value of the Mw/Mn can be changed, for example, by mixing a plurality of propylene-based polymers having different MFRs, and thus adjusting the molecular weight distribution of the propylene-based polymer composition. The Mw/Mn can be obtained by the method described in EXAMPLES described later.

(14) A ratio (Mz/Mn) between a Z-average molecular weight (Mz) and the number average molecular weight (Mn) measured by the GPC is 10.0 to 25.0, preferably 10.0 to 20.0, more preferably 11.0 to 18.5.

The numerical value of the Mz/Mn can be changed, for example, by mixing a plurality of propylene-based polymers having different MFRs, and thus adjusting the molecular weight distribution of the propylene-based polymer composition. The Mz/Mn can be obtained by the method described in EXAMPLES described later.

(15) An amount of a component having a molecular weight measured by the GPC of 100000 or less is 30 mass% to 50 mass%, preferably 30 mass% to 45 mass%, more preferably 30 mass% to 40 mass%.

The numerical value of the amount of the component having a molecular weight of 100000 or less can be changed, for example, by mixing a plurality of propylene-based polymers having different MFRs, and thus adjusting the molecular weight and the molecular weight distribution of the propylene-based polymer composition. The amount of the component having a molecular weight of 100000 or less can be obtained by the method described in EXAMPLES described later.

(16) An amount of a component having a molecular weight measured by the GPC of 1500000 or more is 2.3 mass% to 5.0 mass%, preferably 2.6 mass% to 5.0 mass%, more preferably 2.6 mass% to 4.0 mass%.

The numerical value of the amount of the component having a molecular weight of 1500000 or more can be changed, for example, by mixing a plurality of propylene-based polymers having different MFRs, and thus adjusting the molecular weight and the molecular weight distribution of the propylene-based polymer composition. The amount of the component having a molecular weight of 1500000 or more can be obtained by the method described in EXAMPLES described later.

The film (specifically, the biaxially stretched film) according to the present embodiment can be obtained by biaxially stretching the propylene-based polymer or propylene-based polymer composition described above. A specific biaxially stretching method is described later.

The film (specifically, the biaxially stretched film) according to the present embodiment satisfies an inequality (I) below as a requirement (1).

$$-0.35 < BO^{MD} - BO^{TD} < 1.00 \quad (I)$$

(In the inequality,

$BO^{MD}$ represents a degree of orientation in a MD direction of the film measured using a birefringence method, and $BO^{TD}$ represents a degree of orientation in a TD direction of the film measured using the birefringence method.)

The biaxially stretched film containing the propylene-based polymer or the propylene-based polymer composition is obtained by stretching an unstretched film, and exhibits a high Young's modulus due to a phenomenon in which molecular chains of the propylene-based polymer contained in the unstretched film are oriented by the stretch. In order to obtain the biaxially stretched film having a high Young's modulus, the molecular chains of the propylene-based polymer need to be oriented by strongly stretching the unstretched film. For example, strongly stretching the unstretched film in the MD direction, however, tends to lower the orientation of the molecular chains of the propylene-based polymer in the TD direction perpendicular to the MD direction. Therefore, in order to obtain the biaxially stretched film having a high Young's modulus in both the MD and TD directions, it is necessary to orient the molecular chains in the MD and TD directions of the propylene-based polymer in good balance. With the value of "$BO^{MD} - BO^{TD}$" being in the above range, the film is obtained in which the molecular chains in the MD and TD directions of the propylene-based polymer are oriented in good balance, and the film therefore exhibits a high Young's modulus in both the MD and TD directions.

The film having a value of $BO^{MD} - BO^{TD}$ of less than - 0.35 has many molecular chains oriented in the TD direction of the propylene-based polymer and has an excellent Young's modulus in the TD direction but a poor Young's modulus in the MD direction.

The film having a value of $BO^{MD} - BO^{TD}$ of more than 1 has many molecular chains oriented in the MD direction of the propylene-based polymer and has an excellent Young's modulus in the MD direction but a poor Young's modulus in the TD direction.

In order to obtain the film having a more excellent Young's modulus in the MD and TD directions, the film has a value of $BO^{MD} - BO^{TD}$ of preferably more than -0.35 and less than 0.35, more preferably more than -0.25 and less than 0.25.

The numerical values of $BO^{MD}$ and $BO^{TD}$ can be changed, for example by adjusting the stretch ratio in the MD and TD directions and the stretch temperature to control the orientation of the molecular chains of the propylene-based polymer. $BO^{MD}$ and $BO^{TD}$ can be obtained by the method described in EXAMPLES described later.

The film (specifically, the biaxially stretched film) according to the present embodiment satisfies an inequality (II) below as a requirement (2).

$$I_{0.2}^{MD}/I_{0.6}^{TD} < 1.5 \quad (II)$$

(In the inequality,
$I_{0.2}^{MD}$ represents an intensity at a position of a scattering vector q of 0.2 nm$^{-1}$ in a Kratky plot in the MD direction of the film measured using a small-angle X-ray scattering method, and
$I_{0.6}^{TD}$ represents an intensity at a position of a scattering vector q of 0.6 nm$^{-1}$ in a Kratky plot in the TD direction of the film measured using the small-angle X-ray scattering method.)

$I_{0.2}^{MD}$ reflects lamellar structures oriented in the MD direction of the propylene-based polymer. $I_{0.6}^{TD}$ reflects fibrillar structures of the propylene-based polymer produced by destroying, through strong stretching, the lamellar structures oriented in the MD direction of the propylene-based polymer.

A small value of $I_{0.2}^{MD}/I_{0.6}^{TD}$ means that the film has therein less lamellar structures of the propylene-based polymer but many fibrillar structures of the propylene-based polymer. Such a film has a high Young's modulus in the MD direction. The value of $I_{0.2}^{MD}/I_{0.6}^{TD}$ is preferably less than 1.3, more preferably more than 0.1 and less than 1.2.

The numerical values of $I_{0.2}^{MD}$ and $I_{0.6}^{TD}$ can be changed, for example by adjusting the stretch ratio in the MD direction and the stretch temperature to control the orientation structures of the molecular chains of the propylene-based polymer. $I_{0.2}^{MD}$ and $I_{0.6}^{TD}$ can be obtained by the method described in EXAMPLES described later.

The film (specifically, the biaxially stretched film) according to the present embodiment satisfies an inequality (III) below as a requirement (3).

$$I_{0.2}^{TD}/I_{0.6}^{MD} < 1.5 \quad (III)$$

(In the inequality,
$I_{0.2}^{TD}$ represents an intensity at a position of the scattering vector q of 0.2 nm$^{-1}$ in the Kratky plot in the TD direction of the film measured using the small-angle X-ray scattering method, and
$I_{0.6}^{MD}$ represents an intensity at a position of the scattering vector q of 0.6 nm$^{-1}$ in the Kratky plot in the MD direction of the film measured using the small-angle X-ray scattering method.)

$I_{0.2}^{TD}$ reflects lamellar structures oriented in the TD direction of the propylene-based polymer. $I_{0.6}^{MD}$ reflects fibrillar structures of the propylene-based polymer produced by destroying, through strong stretching, the lamellar structures oriented in the MD direction of the propylene-based polymer.

A small value of $I_{0.2}^{TD}/I_{0.6}^{MD}$ means that the film has therein less lamellar structures of the propylene-based polymer but many fibrillar structures of the propylene-based polymer. Such a film has a high Young's modulus in the TD direction. The value of $I_{0.2}^{TD}/I_{0.6}^{MD}$ is preferably less than 1.3, more preferably less than 1.2.

The numerical values of $I_{0.2}^{TD}$ and $I_{0.6}^{MD}$ can be changed, for example by adjusting the stretch ratio in the TD direction and the stretch temperature to control the orientation structures of the propylene-based polymer. $I_{0.2}^{TD}$ and $I_{0.6}^{MD}$ can be obtained by the method described in EXAMPLES described later.

The film (specifically, the biaxially stretched film) according to the present embodiment preferably satisfies an inequality (IV) below as a requirement (4).

$$Int\_1/Int\_2 > 1.1 \quad (IV)$$

(In the inequality,
Int_1 represents a peak-top intensity in the TD direction of a (110) plane of an $\alpha$-crystal in the propylene-based polymer in a two-dimensional scattering image of the film measured using a wide-angle X-ray scattering method, and Int_2 represents a peak-top intensity at 45° from the TD direction of the (110) plane of the $\alpha$-crystal in the propylene-based polymer in the two-dimensional scattering image of the film measured using the wide-angle X-ray scattering method.)

Int_1 represents the $\alpha$-crystals of the propylene-based polymer oriented in the TD direction, and Int_2 represents the $\alpha$-crystals of the propylene-based polymer oriented in the intermediate direction between the TD and MD directions. Int_1 is preferably observed at a scattering angle $2\theta$ in a range of 10° to 16°, more preferably in a range of 10° to 13°. Int_2 is preferably observed at a scattering angle 2θ in a range of 10° to 16°, more preferably in a range of 10° to 13°. When the $\alpha$-crystals of the propylene-based polymer are appropriately oriented in the TD direction, the film has excellent variety (uniform stretchability) in the width along the TD direction. The value of Int_1/Int_2 is more preferably more than 1.1 and less than 4.0, further preferably more than 1.1 and less than 2.5.

The numerical values of Int_1 and Int_2 can be changed by adjusting the stretch ratio in the MD and TD directions and the stretch temperature to control the orientation of the molecular chains of the propylene-based polymer when stretching the propylene-based polymer composition by sequential biaxial stretching. Int_1 and Int_2 can be obtained by the method described in EXAMPLES described later.

The film (specifically, the biaxially stretched film) according to the present embodiment preferably satisfies a requirement (5).

(5) A diffraction peak of a (040) plane of the $\alpha$-crystal in the propylene-based polymer measured using a wide-angle X-ray diffraction method is at 16.81° or more.

When an unstretched film is stretched at a high stretch ratio to obtain a biaxially stretched film having a high Young's modulus, the film forms therein unstable crystals having wide lattice spacing and tends to be easily shrunk by heat. When the diffraction peak of the (040) plane of the $\alpha$-crystal in the propylene-based polymer measured using the wide-angle X-ray diffraction method is positioned at 16.81° or more, the film contains therein a small amount of unstable crystals and therefore has excellent heat shrinkability. The diffraction peak of the (040) plane of the $\alpha$-crystal in the propylene-based polymer measured using the wide-angle X-ray diffraction method is positioned at more preferably 16.85° or more, further preferably 16.90° or more.

The numerical value of this diffraction peak can be changed, for example by adjusting the relaxation ratio and the temperature in a TD-direction relaxing step to control the orientation of the molecular chains of the propylene-based polymer. This diffraction peak can be obtained by the method described in EXAMPLES described later.

The film (specifically, the biaxially stretched film) according to the present embodiment preferably satisfies an inequality (V) below as a requirement (6).

$$0.5 \times (Int\_A + Int\_B)/Int\_C > 1.1 \quad (V)$$

(In the inequality,
Int_A represents the peak-top intensity in the TD direction of the (110) plane of the $\alpha$-crystal in the propylene-based polymer in the two-dimensional scattering image of the film measured using the wide-angle X-ray scattering method,
Int_B represents a peak-top intensity in the MD direction of the (110) plane of the $\alpha$-crystal in the propylene-based polymer in the two-dimensional scattering image of the film measured using the wide-angle X-ray scattering method, and
Int_C represents the peak-top intensity at 45° from the TD direction of the (110) plane of the $\alpha$-crystal in the propylene-based polymer in the two-dimensional scattering image of the film measured using the wide-angle X-ray scattering method.)

Int_A represents the $\alpha$-crystals of the propylene-based polymer oriented in the TD direction, Int_B represents the $\alpha$-crystals of the propylene-based polymer oriented in the MD direction, and Int_C represents the $\alpha$-crystals of the propylene-based polymer oriented in the intermediate direction between the TD and MD directions. When the value of $0.5 \times$ (Int_A + Int_B)/Int_C is more than 1.1, the $\alpha$-crystals of the propylene-based polymer are appropriately oriented in the TD or MD direction and the film has excellent variety (uniform stretchability) in the width along the TD direction. The value of $0.5 \times$ (Int_A + Int_B)/Int_C is more preferably more than 1.1 and less than 3.0, further preferably more than 1.1 and less than 2.0.

The numerical values of Int_A, Int_B, and Int_C can be changed by adjusting the stretch ratio in the MD and TD directions and the stretch temperature to control the orientation of the molecular chains of the propylene-based polymer when stretching the propylene-based polymer composition by sequential biaxial stretching. Int_A, Int_B, and Int_C can be obtained by the method described in EXAMPLES described later.

The film (specifically, the biaxially stretched film) according to the present embodiment has a thickness of preferably 10 um to 70 um, more preferably 10 $\mu$m to 30 $\mu$m.

A method, according to the present embodiment, for producing a film (specifically, a biaxially stretched film) is performed by sequential biaxial stretching. In this production method, a propylene-based polymer composition is used that contains a propylene-based polymer and at least one stretchability improving agent selected from the group consisting of a $\beta$-crystal nucleating agent and a hydrocarbon resin.

The method, according to the present embodiment, for producing a film (specifically, a biaxially stretched film) includes an extruding step of, with an extruder, heat-melting and extruding onto a cooling roll a propylene-based polymer composition to give an unstretched sheet. In the extruding step, an unstretched sheet can be obtained, for example, by heat-melting a propylene-based polymer composition with an extruder and extruding, with a T-die, the composition onto a cooling roll, thereby cooling and fixing the composition in a sheet shape.

The method, according to the present embodiment, for producing a film (specifically, a biaxially stretched film) also includes a MD stretching step of stretching the unstretched sheet obtained in the extruding step, with a stretching roll, by 6 times to 10 times, preferably 8 times to 10 times in a MD direction to give a uniaxially stretched sheet.

The method, according to the present embodiment, for producing a film (specifically, a biaxially stretched film) also includes a TD stretching step of stretching the uniaxially stretched sheet obtained in the MD stretching step, with chucks arranged in two rows along the MD direction, in a heating furnace, by 4 times to 20 times, preferably 4 times to 10 times in a TD direction to give a biaxially stretched film. In the TD stretching step, a biaxially stretched film can be obtained, for example, by holding both side ends in the TD direction of the uniaxially stretched sheet with chucks arranged in two rows along the MD direction, and stretching the uniaxially stretched sheet at the ratio described above in the TD direction in a heating furnace including a preheating section, a stretching section, and a heat treatment section.

The method, according to the present embodiment, for producing a film (specifically, a biaxially stretched film) also includes a relaxing step of relaxing a stretch in the TD direction of the biaxially stretched film obtained in the TD stretching step, with the chucks arranged in two rows along the MD direction, in the heating furnace, by 16% to 30%, preferably 18% to 25% in the TD direction. In the relaxing step, a stretch in the TD direction of the biaxially stretched film obtained in the TD stretching step is relaxed at the ratio described above by narrowing the spacing in the TD direction between the two-row chucks holding both the side ends in the TD direction of the biaxially stretched film. With the relaxation ratio being less than 160, the shrinkage rate during heating is increased and the biaxially stretched film having excellent heat resistance cannot be obtained. With the relaxation ratio being more than 30%, the film easily increases uneven thickness. The relaxation ratio can be obtained by an equation (X) below.

$$\texttt{Relaxation ratio = (L1 - L2)/L1 } \times \texttt{ 100 (X)}$$

(In the equation,
L1 represents a distance between the chucks in the TD direction before the relaxation of the film, and L2 represents a distance between the chucks in the TD direction after the relaxation of the film.)

The method, according to the present embodiment, for producing a film (specifically, a biaxially stretched film) may also include a step of performing a corona treatment or the like as necessary.

In the production method, the melting temperature for heat-melting the propylene-based polymer composition with the extruder is preferably 230 to 290°C. The temperature of the cooling roll for cooling and fixing the propylene-based polymer composition, which has been extruded from the T-die, in a sheet shape is preferably 10°C to 60°C. The temperature of the stretching roll for stretching the unstretched sheet in the MD direction is preferably 110 to 165°C. The heating temperature for stretching the uniaxially stretched sheet in the TD direction is preferably 150 to 200°C, and the heating temperature for relaxation in the TD direction is preferably 150 to 200°C.

The film (specifically, the biaxially stretched film) according to the present embodiment can be used as one layer of a multilayer film. The multilayer film is obtained by stacking any layer on a layer made of the film (specifically, the biaxially stretched film) according to the present embodiment. The multilayer film can be structured, for example, by stacking any layer such as a sealant layer, a gas barrier layer, an adhesive layer, and a printing layer on the film (specifically, the biaxially stretched film) according to the present embodiment. Among these examples, the multilayer film is preferably obtained by stacking a sealant layer including an olefin-based film on a layer made of the film (specifically, the biaxially stretched film) according to the present embodiment. The obtained multilayer film has an effect of being easily recycled. Examples of a method for preparing the multilayer film including the film (specifically, the biaxially stretched film) according to the present embodiment include an extrusion lamination method, a heat lamination method, and a dry lamination method that are typically used.

The film (specifically, the biaxially stretched film) according to the present embodiment can be used as various packaging materials. For example, a packaging bag formed of the multilayer film can be used for the purpose of packaging any object to be packaged such as food, clothes, and miscellaneous goods.

As described above, by satisfying the requirements (1) to (3), the film according to the present embodiment has a relatively high tensile modulus of elasticity (Young's modulus) in both the MD and TD directions, has relatively excellent high-temperature dimensional stability in the TD direction, and has relatively excellent uniform stretchability in the TD direction during production.

In addition, by satisfying the requirement (4), the film according to the present embodiment has more excellent uniform stretchability.

In addition, by satisfying the requirement (5), the film according to the present embodiment has more excellent high-temperature dimensional stability in the TD direction.

By including the MD stretching step, TD stretching step, and relaxing step performed at the ratio described above, the method, according to the present embodiment, for producing a film can give a film having a relatively high tensile modulus of elasticity (Young's modulus) in both the MD and TD directions, having relatively excellent high-temperature dimensional stability in the TD direction, and having relatively excellent uniform stretchability in the TD direction during production.

By having an MFR, a die swell ratio, a Mw/Mn, and a Mz/Mn in the range described above, having an amount of the component having a molecular weight of 100000 or less and an amount of the component having a molecular weight of 1500000 or more in the range described above, the propylene-based polymer composition according to the present embodiment can give a film having a relatively high tensile modulus of elasticity (Young's modulus) in both the MD and TD directions, having relatively excellent high-temperature dimensional stability in the TD direction, and having relatively excellent uniform stretchability in the TD direction during production.

The film, the method for producing a film, and the propylene-based polymer composition each according to the present invention are not limited to the embodiment described above, and can be variously modified without departing from the gist of the present invention. Needless to say, the present invention may be accomplished by combining any of the structures, methods, and the like of the plurality of embodiments described above and below (the structure, method, or the like according to one embodiment may be applied to the structure, method, or the like according to another embodiment).

EXAMPLES

The measurement values of the items in examples and comparative examples were obtained by the methods below.

(1) Melt flow rate (MFR, unit: g/10 min)

The MFR of the propylene-based polymer or the propylene-based polymer composition was measured at a temperature of 230°C and a load of 2.16 kg in accordance with the method A specified in JIS K7210-1: 2014.

(2) Die swell ratio (SR, unit: -)

The die swell ratio of the propylene-based polymer composition was obtained by measuring the diameter of a section of a propylene-based polymer composition-extruded product obtained when the MFR of the propylene-based polymer composition was measured at a temperature of 230°C and a load of 2.16 kg in accordance with the method A specified in JIS K7210-1: 2014 and solving the equation below. The section of the propylene-based polymer composition-extruded product means a section orthogonal to the extrusion direction. When the section is not a perfect circle, the diameter of the section means the average value of the maximum value and the minimum value of the diameter of the section.

$$SR = Dp/Dh$$

(In the equation,
SR represents a die swell ratio of the propylene-based polymer composition,
Dh represents an orifice diameter of a section of a propylene-based polymer composition-extruded product, and
Dp represents a diameter of a section of the propylene-based polymer composition-extruded product.)

(3) Amount of cold xylene-soluble fraction (CXS, unit: mass%)

The propylene-based polymer or the propylene-based polymer composition in an amount of 1 g was completely dissolved in 100 ml of boiling xylene, and then the mixture was cooled to 20°C and stirred for 1 hour. After the obtained mixture was filtrated into a precipitate and a solution, the amount of the components dissolved in the solution was quantified by liquid chromatography under the conditions below and the CXS was obtained.

Column: SHODEX GPC KF-801
Eluent: tetrahydrofuran
Temperature of column oven: 40°C
Dose of sample: 130 $\mu$L
Flow rate: 1 mL/min
Detector: differential refractometer

(4) Molecular weight distribution

The molecular weight distribution of the propylene-based polymer composition was measured using gel permeation chromatography (GPC) under the conditions below. Specifically, in the measurement of the molecular weight distribution of the propylene-based polymer composition in accordance with the method specified in JIS K7252-1: 2016 8.3.2, the peak identified as being derived from an additive such as a hydrocarbon resin and an antioxidant was excluded.

Model: HLC-8121GPC/HT (manufactured by Tosoh Corporation)
Column: TSKgel GMHHR-H(S)HT 7.5 mm I.D. $\times$ 300 mm (manufactured by Tosoh Corporation) 3 columns connected
Measurement temperature: 140°C
Detector: differential refractive index detector
Solvent: ortho-dichlorobenzene
Concentration of sample: 0.7 mg/mL

A calibration curve was made using standard polystyrene, and a measurement result in terms of polystyrene was obtained. By multiplying the obtained measurement value by a Q-factor value of 26.4, the molecular weight of the propylene-based polymer composition was calculated as molecular weight in terms of polypropylene. Obtained as indexes of the molecular weight distribution were a ratio (Mw/Mn) between a weight average molecular weight (Mw) and a number average molecular weight (Mn), a ratio (Mz/Mn) between a Z-average molecular weight (Mz) and the number average molecular weight (Mn), and the amounts of a component having a molecular weight in terms of polypropylene of 100000 or less and a component having a molecular weight in terms of polypropylene of 1500000 or more.

(5) Limiting viscosity ($[\eta]$, unit: dL/g)

The limiting viscosity of the propylene-based polymer was measured using an Ubbelohde viscometer in tetralin at 135°C.

(6) Wide-angle X-ray diffraction

The obtained biaxially stretched film was subjected to wide-angle X-ray diffractometry by a reflection method under the conditions below.

- Model: RINT2500 manufactured by Rigaku Corporation
- Tube: Cu-K$\alpha$

- Detector: scintillation counter
- Scanning range: 2θ = 10 to 20° (every 0.02°)

A sample was placed such that the surface (MD-TD plane) of the biaxially stretched film was parallel with an angle 2θ of 0°, and the TD direction of the biaxially stretched film was parallel with the line connecting the detector with the X-ray source, and the measurement was performed. The propylene-based polymer was, from the obtained 2θ profile, measured for the position of the diffraction peak of the (040) plane of the α-crystal.

(7) Birefringence

The obtained biaxially stretched film was measured for the orientation function in the MD direction, the TD, direction, and the ND direction (normal direction to the MD-TD plane) in accordance with the method described in "Introduction to higher-order structural analysis of plastic molded article, pp. 72-74, edited by the Japan Society of Polymer Processing, THE NIKKAN KOGYO SHIMBUN, LTD. (2006)".

Specifically, a sample was placed on an optical axis such that the ND direction is parallel with the laser optical axis, the TD direction is horizontal to the ground, and the MD direction is vertical to the ground. The retardation of the sample was measured using the Senarmont method. Using a laser beam having a wavelength of 632.8 nm and under the conditions of rotating the sample from -40° to 40° by 10° with the MD direction of the sample used as a rotational axis, the retardation was measured for each wavelength and each rotation angle. From the obtained values of retardation, a refractive index ($N^{MD}$) in the MD direction, a refractive index ($N^{TD}$) in the TD direction, and a refractive index ($N^{ND}$) in the ND direction were calculated. Here, an average refractive index ($N^{ave}=$) represented by an equation (A) below was defined as 1.48.

$$N^{ave} = (N^{MD} + N^{TD} + N^{ND})/3 \quad (A)$$

From the calculated $N^{MD}$, $N^{TD}$, and $N^{ND}$, a degree of orientation $BO^{MD}$ in the MD direction of the biaxially stretched film and a degree of orientation $BO^{TD}$ in the TD direction of the biaxially stretched film were calculated by the following calculation equation. Here, an intrinsic birefringence ($\Delta n0$) of a propylene homopolymer was defined as 0.04.

[Math 1]

$$BO^i = \frac{\sum_{j=MD,TD,ND}(N^i - N^j)}{2\Delta n_0} \quad (i = MD, TD, ND)$$

(8) Small-angle X-ray scattering

The obtained biaxially stretched film was subjected to small-angle X-ray scattering measurement under the conditions below and measured for $I_{0.2}{}^{MD}$, $I_{0.6}{}^{MD}$, $I_{0.2}{}^{TD}$, and $I_{0.6}{}^{TD}$. $I_{0.2}{}^{MD}$ represents an intensity at a position of a scattering vector q of 0.2 nm$^{-1}$ in a Kratky plot in the MD direction of the film measured using a small-angle X-ray scattering method. $I_{0.6}{}^{TD}$ represents an intensity at a position of a scattering vector q of 0.6 nm$^{-1}$ in a Kratky plot in the TD direction of the film measured using the small-angle X-ray scattering method.) $Io_{.2}{}^{TD}$ represents an intensity at a position of the scattering vector q of 0.2 nm$^{-1}$ in the Kratky plot in the TD direction of the film measured using the small-angle X-ray scattering method. $I_{0.6}{}^{MD}$ represents an intensity at a position of the scattering vector q of 0.6 nm$^{-1}$ in the Kratky plot in the MD direction of the film measured using the small-angle X-ray scattering method.

- Model: Nano Viewer manufactured by Rigaku Corporation
- Tube: Cu-Kα
- Voltage: 40kV
- Current: 20 mA
- Beam diameter: 0.25 mmφ
- Detector: PILATUS 100k

A measurement test piece was prepared by layering 25 biaxially stretched films in the ND direction, with the TD directions of the films coincident with each other. Specifically, a two-dimensional scattering image was obtained with an incident X-ray in parallel with the ND direction. The obtained two-dimensional scattering image was corrected using a two-dimensional scattering image (air blank) obtained without placing the measurement test piece. The Kratky plots in the MD and TD directions were obtained from a scattering intensity profile in the MD direction and a scattering intensity profile in the TD direction of the corrected two-dimensional scattering image.

From the measured Kratky plots, $I_{0.2}^{MD}/I_{0.6}^{TD}$ and $I_{0.2}^{TD}/I_{0.6}^{MD}$ were calculated.

(9) Wide-angle X-ray scattering

The obtained biaxially stretched film was subjected to wide-angle X-ray scattering measurement under the conditions below.

- Model: Nano Viewer manufactured by Rigaku Corporation
- Tube : Cu-K$\alpha$
- Voltage: 40kV
- Current: 20 mA
- Beam diameter: 0.25 mm$\varphi$
- Detector: PILATUS 100k

A measurement test piece was prepared by layering 25 biaxially stretched films in the ND direction, with the TD directions of the films coincident with each other. Specifically, a two-dimensional scattering image was obtained with an incident X-ray in parallel with the ND direction. The obtained two-dimensional scattering image was corrected using a two-dimensional scattering image (air blank) obtained without placing the measurement sample. From the corrected two-dimensional scattering image, an azimuthal profile was obtained by plotting, with respect to azimuth, the peak-top intensity of scattering on the (110) plane of the $\alpha$-crystal in the propylene homopolymer. From the obtained azimuthal profile, a scattering intensity ratio (Int_1/Int_2) between a scattering intensity in the TD direction (Int_1) and a scattering intensity in the TD $\pm$ 45° direction (Int_2) was calculated.

From the obtained azimuthal profile, the values of a scattering intensity in the TD direction (Int_A), a scattering intensity in the MD direction (Int_B), a scattering intensity in the TD $\pm$ 45° direction (Int_C) were obtained, and an average scattering intensity ratio 0.5 $\times$ (Int_A + Int_B)/Int_C was calculated.

(10) Density (D, unit: g/cm$^3$)

The density of the biaxially stretched film was measured by a density-gradient tube method in accordance with the method D (water/ethanol) described in JIS K7112-1999.

(11) Thickness of film (unit: $\mu$m)

The thickness of the biaxially stretched film was measured with a contact-type film thickness gauge in accordance with the method A described in JIS K7130-1999.

(12) Young's modulus (unit: GPa)

A piece (120 mm $\times$ 20 mm) was taken from the biaxially stretched film with the long-side direction (120 mm) coincident with the measurement direction (MD direction, TD direction), subjected to a tensile test in the atmosphere of 23°C and a humidity of 50%, using UNIVERSAL TESTING MACHINE STB-1225 (A & D Company, Limited), with a grip spacing of 60 mm, at a tensile speed of 5 mm/min, and measured for the Young's modulus (MD direction, TD direction) from a tangent to a tensile-stress curve at the zero point.

(13) Uniform stretchability (relative standard deviation, unit: %)

In sequential biaxial stretching, an unstretched sheet was obtained by heat-melting a propylene-based polymer composition with an extruder and extruding, with a T-die, the composition onto a cooling roll, thereby cooling and fixing the composition in a sheet shape. The obtained unstretched sheet was stretched in the MD direction, using a heated stretching roll, to give a uniaxially stretched sheet. On the obtained uniaxially stretched sheet, gauge lines were printed using a stamp including 10 gauge lines arranged every 9 mm in the TD direction. While the gauge line-printed uniaxially stretched sheet had both side ends thereof in the TD direction held with chucks arranged in two rows along the MD direction, the uniaxially stretched sheet was stretched in the TD direction in a heating furnace including a preheating section, a stretching section, and a heat treatment section. Thereafter, the stretch in the TD direction was relaxed by narrowing the spacing between the two-row chucks to give a biaxially stretched film. The gaps between the gauge lines in the TD direction of the obtained biaxially stretched film were read, and a relative standard deviation of the gauge-line gaps was obtained and used as a scale of stretch processability. A smaller value of relative standard deviation means more uniform stretch processing and better stretch processability (uniform stretchability).

In simultaneous biaxial stretching, an unstretched sheet was obtained by heat-melting a propylene-based polymer composition with an extruder and extruding, with a T-die, the composition onto a cooling roll, thereby cooling and fixing the composition in a sheet shape. On the obtained unstretched sheet, gauge lines were printed using a stamp including 10 gauge lines arranged every 9 mm in the TD direction. While the gauge line-printed unstretched sheet had four sides thereof held with chucks, the unstretched sheet was preheated in a heating furnace for a prescribed time and then stretched in both the MD/TD directions to give a biaxially stretched film. The gaps between the gauge lines in the TD direction of the obtained biaxially stretched film were read, and a relative standard deviation of the gauge-line gaps was obtained and used as a scale of stretch processability. A smaller value of relative standard deviation means more uniform stretch processing and better stretch processability (uniform stretchability).

(14) Heat shrinkage rate (unit: %)

A film at an A4 size (length 297 mm × width 210 mm) was, with the long axis thereof in parallel with the MD direction, taken from the biaxially stretched films of the examples except Examples 5 and 6 and Comparative Example 8, a 200-mm gauge line was drawn in the MD and TD directions, and the film was hung in an over at 150°C and kept for 30 minutes. Thereafter, the film was taken out and cooled at room temperature for 30 minutes, and then the length of the gauge lines was measured. The heat shrinkage rate in each direction was calculated from the following calculation equation. A low shrinkage rate means high-temperature dimensional stability.

$$\text{Heat shrinkage rate (\%)} = \{(200 - \text{Length of gauge line after heating (mm)})/200\} \times 100$$

A film at a 100-mm square size (length 100 mm × width 100 mm) was taken from the biaxially stretched films of Examples 5 and 6 and Comparative Example 8, an 80-mm gauge line was drawn in the MD and TD directions, and the film was hung in an over at 150°C and kept for 30 minutes. Thereafter, the film was taken out and cooled at room temperature for 30 minutes, and then the length of the gauge lines was measured. The heat shrinkage rate in each direction was calculated from the following calculation equation.

$$\text{Heat shrinkage rate (\%)} = \{(80 - \text{Length of gauge line after heating (mm)})/80\} \times 100$$

The components used in the examples and the comparative examples are as follows.

<Propylene-based polymer intermediate composition 1>

Propylene was polymerized by a vapor phase polymerization method, using a Ziegler-Natta catalyst, triethylaluminum as a promotor, and cyclohexylethyldimethoxysilane as an external donor, in an environment at a hydrogen concentration of 0.14 mol%, to give a propylene-based polymer A1. In 100 parts by mass of the obtained propylene-based polymer A1 were blended 0.10 parts by mass of calcium stearate (manufactured by SAKAI CHEMICAL INDUSTRY CO., LTD.), 0.15 parts by mass of IRGANOX 1010 (manufactured by BASF Japan Ltd.), and 0.15 parts by mass of IRGAFOS 168 (manufactured by BASF Japan Ltd.), and then the mixture was melt-extruded to give a pellet-shaped propylene-based polymer 1. Table 1 below shows the values of physical properties of the obtained propylene-based polymer 1.

<Propylene-based polymer intermediate composition 2>

A bulk polymerization tank and a vapor phase polymerization tank were connected in series, and polymerization was performed by the procedure below. Specifically, propylene was polymerized by a bulk polymerization method, using a Ziegler-Natta catalyst, triethylaluminum as a promotor, and cyclohexylethyldimethoxysilane as an external donor, to give a propylene-based polymer A2. As a result of analyzing a part sampled from the propylene-based polymer A2, the limiting viscosity was 7 dl/g. The propylene-based polymer A2 was, without being deactivated, continuously transferred to the vapor phase polymerization tank and polymerized by a vapor phase polymerization method in an environment at a hydrogen concentration of 4.4 mol% to form a propylene-based polymer B2, and a propylene-based polymer composition (containing the propylene-based polymers A2 and B2) was thus obtained. The content of the propylene-based polymer A2 in the propylene-based polymer composition was 19 parts by mass. In 85 parts by mass of the obtained propylene-based polymer composition were blended 15 parts by mass of a propylene homopolymer having an MFR of 60 g/10 min, 0.04 parts by mass of calcium stearate (manufactured by SAKAI CHEMICAL INDUSTRY CO., LTD.), 0.18 parts by mass of IRGANOX 1010 (manufactured by BASF Japan Ltd.), and 0.25 parts by mass of IRGAFOS 168 (manufactured by BASF Japan Ltd.), and then the mixture was melt-extruded to give a pellet-shaped propylene-based polymer intermediate composition 2. Table 1 below shows the values of physical properties of the obtained propylene-based polymer intermediate composition 2.

<Propylene-based polymer intermediate composition 3>

A bulk polymerization tank and a vapor phase polymerization tank were connected in series, and polymerization was performed by the procedure below. Propylene was polymerized by a bulk polymerization method, using a Ziegler-Natta catalyst, triethylaluminum as a promotor, and cyclohexylethyldimethoxysilane as an external donor, to give a propylene-based polymer A3. As a result of analyzing a part sampled from the propylene-based polymer A3, the limiting viscosity was 7 dl/g. The propylene-based polymer A3 was, without being deactivated, continuously transferred to the vapor phase polymerization tank and polymerized by a vapor phase polymerization method in an environment at a hydrogen concentration of 5.7 mol% to form a propylene-based polymer B3, and a propylene-based polymer composition (containing the propylene-based polymers A3 and B3) was thus obtained. The content of the propylene-based polymer A3 in 100 parts by mass of the propylene-based polymer composition was 19 parts by mass. In 100 parts by mass of the obtained propylene-based polymer composition were blended 0.05 parts by mass of calcium stearate (manufactured by SAKAI CHEMICAL INDUSTRY CO., LTD.), 0.10 parts by mass of IRGANOX 1010 (manufactured by BASF Japan Ltd.), and 0.15 parts by mass of IRGAFOS 168 (manufactured by BASF Japan Ltd.), and then the mixture was melt-extruded to give a pellet-shaped propylene-based polymer intermediate composition 3. Table 1 below shows the values of physical properties of the obtained propylene-based polymer intermediate composition 3.

<β-crystal nucleating agent masterbatch>

Propylene was polymerized by a vapor phase polymerization method, using a Ziegler-Natta catalyst, triethylaluminum as a promotor, and cyclohexylethyldimethoxysilane as an external donor, in an environment at a hydrogen concentration of 0.95 mol%, to give a propylene-based polymer. In 95 parts by mass of the obtained propylene-based polymer were blended 5 parts by mass of NU-100 (β-crystal nucleating agent, manufactured by New Japan Chemical Co., Ltd.), 0.005 parts by mass of DHT-4C (neutralizer, manufactured by Kyowa Chemical Industry Co., Ltd.), 0.09 parts by mass of IRGANOX 1010 (antioxidant, manufactured by BASF Japan Ltd.), and 0.05 parts by mass of SUMILIZER GP (antioxidant, manufactured by SUMITOMO CHEMICAL COMPANY, LIMITED), and then the mixture was melt-extruded to give pellet-shaped β-crystal nucleating agent masterbatch.

<α-crystal nucleating agent masterbatch>

Propylene was polymerized by a vapor phase polymerization method, using a Ziegler-Natta catalyst, triethylaluminum as a promotor, and cyclohexylethyldimethoxysilane as an external donor, in an environment at a hydrogen concentration of 0.95 mol%, to give a propylene-based polymer. In 87 parts by mass of the obtained propylene-based polymer were blended 10 parts by mass of G-DXR (α-crystal nucleating agent, manufactured by New Japan Chemical Co., Ltd.), 3 parts by mass of ADK STAB PEP-36 (antioxidant, manufactured by ADEKA Corporation), 0.05 parts by mass of calcium stearate (neutralizer, manufactured by SAKAI CHEMICAL INDUSTRY CO., LTD.), 0.05 parts by mass of SUMILIZER GP (antioxidant, manufactured by SUMITOMO CHEMICAL COMPANY, LIMITED), 0.05 parts by mass of IRGAFOS 168 (antioxidant, manufactured by BASF Japan Ltd.), and 0.05 parts by mass of Caltech LT (neutralizer, manufactured by SUZUKI INDUSTRY), and then the mixture was melt-extruded to give pellet-shaped α-crystal nucleating agent masterbatch.

<Propylene-based polymer composition 11>

The propylene-based polymer intermediate composition 1 (69 parts by mass), the propylene-based polymer intermediate composition 2 (30 parts by mass), and the β-crystal nucleating agent masterbatch (1 part by mass) were mixed using a Henschel mixer to prepare a propylene-based polymer composition 11. Table 1 below shows the values of physical properties of pellets obtained by melt-extruding the propylene-based polymer composition 11.

<Propylene-based polymer composition 12>

The propylene-based polymer intermediate composition 1 (79 parts by mass), the propylene-based polymer intermediate composition 3 (20 parts by mass), and the β-crystal nucleating agent masterbatch (1 part by mass) were mixed using a Henschel mixer to prepare a propylene-based polymer composition 12. Table 1 below shows the values of physical properties of pellets obtained by melt-extruding the propylene-based polymer composition 12.

<Propylene-based polymer composition 13>

The propylene-based polymer intermediate composition 1 (89 parts by mass), the propylene-based polymer intermediate composition 3 (10 parts by mass), and the β-crystal nucleating agent masterbatch (1 part by mass) were mixed using a Henschel mixer to prepare a propylene-based polymer composition 13. Table 1 below shows the values of physical properties of pellets obtained by melt-extruding the propylene-based polymer composition 13.

<Propylene-based polymer composition 14>

The propylene-based polymer intermediate composition 1 (99 parts by mass) and the β-crystal nucleating agent masterbatch (1 part by mass) were mixed using a Henschel mixer to prepare a propylene-based polymer composition 14. Table 1 below shows the values of physical properties of pellets obtained by melt-extruding the propylene-based polymer composition 14.

<Propylene-based polymer composition C11>

The propylene-based polymer intermediate composition 1 (99 parts by mass) and the α-crystal nucleating agent masterbatch (1 part by mass) were mixed using a Henschel mixer to prepare a propylene-based polymer composition C11. Table 1 below shows the values of physical properties of pellets obtained by melt-extruding the propylene-based polymer composition C11.

<Propylene-based polymer composition C12>

The propylene-based polymer intermediate composition 1 (98 parts by mass) and the β-crystal nucleating agent masterbatch (2 parts by mass) were mixed using a Henschel mixer to prepare a propylene-based polymer composition C12. Table 1 below shows the values of physical properties of pellets obtained by melt-extruding the propylene-based polymer composition C12.

[Table 1]

| Material | MFR (g/10 min) | SR | CXS (%) | Mw/Mn | Mz/Mn | Amount of component having molecular weight of 100000 or less (mass%) | Amount of component having molecular weight of 1500000 or more (mass%) | Crystal nucleating agent |
|---|---|---|---|---|---|---|---|---|
| Propylene-based polymer intermediate composition 1 | 2.3 | 1.17 | 0.4 | 3.1 | 6.9 | 27 | 2.5 | - |

(continued)

| Material | MFR (g/10 min) | SR | CXS (%) | Mw/Mn | Mz/Mn | Amount of component having molecular weight of 100000 or less (mass%) | Amount of component having molecular weight of 1500000 or more (mass%) | Crystal nucleating agent |
|---|---|---|---|---|---|---|---|---|
| Propylene-based polymer intermediate composition 2 | 11.9 | 2.06 | 0.2 | 7.5 | 51.7 | 48 | 6.6 | - |
| Propylene-based polymer intermediate composition 3 | 8.5 | 1.95 | 0.2 | 10.2 | 92.9 | 49 | 8.0 | - |
| Propylene-based polymer composition 11 | 3.2 | 1.36 | 0.7 | 5.4 | 18.3 | 35 | 2.9 | NU-100 500ppm |
| Propylene-based polymer composition 12 | 2.7 | 1.30 | 0.6 | 4.3 | 13.4 | 31 | 2.7 | NU-100 500ppm |
| Propylene-based polymer composition 13 | 2.3 | 1.24 | 0.6 | 4.3 | 11.5 | 30 | 2.6 | NU-100 500ppm |
| Propylene-based polymer composition 14 | 2.2 | 1.21 | 0.6 | 3.9 | 9.4 | 29 | 2.0 | NU-100 500ppm |
| Propylene-based polymer composition C11 | 2.2 | 1.21 | 0.6 | 3.0 | 6.9 | 27 | 1.8 | G-DXR 1000ppm |
| Propylene-based polymer composition C12 | 2.2 | 1.21 | 0.6 | 3.9 | 9.7 | 29 | 2.2 | NU-100 1000ppm |

<Example 1>

The propylene-based polymer composition 11 was heat-melted at a resin temperature of 260°C, using a T-die film forming machine equipped with an extruder having a screw diameter of 65 mmφ, and extruded onto a cooling roll at 30°C to give an unstretched sheet. The obtained unstretched sheet was stretched by 8 times in the MD direction, using a stretching roll heated to 142°C (roll temperature), to give a uniaxially stretched sheet. While the obtained uniaxially stretched sheet had both side ends thereof in the TD direction held with chucks arranged in two rows along the MD direction, the uniaxially stretched sheet was stretched by 8 times in the TD direction in a heating furnace heated to 170°C (in-furnace temperature 1) by widening the spacing in the TD direction between the two-row chucks, to give a biaxially stretched film. While the obtained biaxially stretched film had both side ends thereof in the TD direction held with the chucks arranged in two rows along the MD direction, the stretch in the TD direction was relaxed by 19.5% in the heating furnace heated to 165°C (in-furnace temperature 2) by narrowing the spacing between the two-row chucks. Tables 2 to 4 below show the production conditions and the measurement values of physical properties of the obtained biaxially stretched film.

<Example 2>

A biaxially stretched film was obtained under the conditions totally the same as in Example 1 except for replacing the propylene-based polymer composition 11 in Example 1 with the propylene-based polymer composition 12. Tables 2 to 4 below show the production conditions and the measurement values of physical properties of the obtained biaxially stretched film.

<Example 3>

A biaxially stretched film was obtained under the conditions totally the same as in Example 1 except for replacing the propylene-based polymer composition 11 in Example 1 with the propylene-based polymer composition 13. Tables 2 to 4 below show the production conditions and the measurement values of physical properties of the obtained biaxially stretched film.

<Example 4>

A biaxially stretched film was obtained under the conditions totally the same as in Example 1 except for replacing the propylene-based polymer composition 11 in Example 1 with the propylene-based polymer composition 14. Tables 2 to 4 below show the production conditions and the measurement values of physical properties of the obtained biaxially stretched film.

<Comparative Example 1>

A biaxially stretched film was obtained under the conditions totally the same as in Example 1 except for replacing the propylene-based polymer composition 11 in Example 1 with the propylene-based polymer composition C11, setting the roll temperature to 152°C, and changing the relaxation ratio in the TD direction to 0%. Tables 2 to 4 below show the production conditions and the measurement values of physical properties of the obtained biaxially stretched film.

<Comparative Example 2>

A biaxially stretched film was obtained under the conditions totally the same as in Example 1 except for replacing the propylene-based polymer composition 11 in Example 1 with the propylene-based polymer composition C11, setting the roll temperature to 152°C, and changing the relaxation ratio in the TD direction to 6.5%. Tables 2 to 4 below show the production conditions and the measurement values of physical properties of the obtained biaxially stretched film.

<Comparative Example 3>

A biaxially stretched film was obtained under the conditions totally the same as in Example 1 except for replacing the propylene-based polymer composition 11 in Example 1 with the propylene-based polymer composition C11 and setting the roll temperature to 152°C. Tables 2 to 4 below show the production conditions and the measurement values of physical properties of the obtained biaxially stretched film.

<Comparative Example 4>

A biaxially stretched film was obtained under the conditions totally the same as in Example 1 except for replacing the propylene-based polymer composition 11 in Example 1 with the propylene-based polymer intermediate composition 1, setting the roll temperature to 152°C, changing the stretch ratio in the MD direction to 5 times, and changing the relaxation ratio in the TD direction to 13 times. Tables 2 to 4 below show the production conditions and the measurement values of physical properties of the obtained biaxially stretched film.

<Comparative Example 5>

The propylene-based polymer intermediate composition 1 was heat-melted at a resin temperature of 260°C, using a T-die film forming machine equipped with an extruder having a screw diameter of 65 mmφ, and extruded onto a cooling roll at 30°C to give an unstretched sheet. The obtained unstretched sheet was stretched by 9 times in the MD direction, using a stretching roll heated to 152°C (roll temperature), to give a uniaxially stretched film. Tables 2 to 4 below show the production conditions and the measurement values of physical properties of the obtained uniaxially stretched film.

<Comparative Example 6>

A biaxially stretched film was obtained under the conditions totally the same as in Example 1 except for replacing the propylene-based polymer composition 11 in Example 1 with the propylene-based polymer composition C11, setting the roll temperature to 152°C, and changing the stretch ratio in the MD direction to 5 times. Tables 2 to 4 below show the production conditions and the measurement values of physical properties of the obtained biaxially stretched film.

<Comparative Example 7>

The propylene-based polymer composition C12 was heat-melted at a resin temperature of 250°C, using a T-die film forming machine equipped with an extruder having a screw diameter of 20 mmφ, and extruded onto a cooling roll at 90°C to give an unstretched sheet having a thickness of 1.0 mm. While the obtained unstretched sheet had four sides thereof held with chucks, the unstretched sheet was preheated for 3 minutes in a heating furnace heated to 140°C and then stretched by 2 times simultaneously in the MD and TD directions. Thereafter, the temperature in the heating furnace was raised to 160°C and the biaxially stretched film was preheated for 3 minutes and then further stretched such that the total stretch ratio became 6.5 times simultaneously in the MD and TD directions. A simultaneous biaxially stretched film was thereby obtained. Tables 2 to 4 below show the production conditions and the measurement values of physical properties of the obtained simultaneous biaxially stretched film.

Table 4 below clarifies the fact that the biaxially stretched films of the examples have a higher Young's modulus in both the MD and TD directions, a better test result of uniform stretchability, and a smaller heat shrinkage rate in the TD direction than those of the biaxially stretched films of the comparative examples. That is, it is found that the biaxially stretched films of the examples have excellent toughness, stretchability, and high-temperature dimensional stability.

[Table 2]

| | Material | Stretch ratio | | Relaxation ratio (%) | Resin temperature (°C) | Roll temperature (°C) | In-furnace temperature 1 (°C) | In-furnace temperature 2 (°C) |
|---|---|---|---|---|---|---|---|---|
| | | MD | TD | | | | | |
| Example 1 | Propylene-based polymer composition 11 | 8 | 8 | 19.5 | 260 | 142 | 170 | 165 |
| Example 2 | Propylene-based polymer composition 12 | 8 | 8 | 19.5 | 260 | 142 | 170 | 165 |
| Example 3 | Propylene-based polymer composition 13 | 8 | 8 | 19.5 | 260 | 142 | 170 | 165 |
| Example 4 | Propylene-based polymer composition 14 | 8 | 8 | 19.5 | 260 | 142 | 170 | 165 |
| Comparative Example 1 | Propylene-based polymer composition C11 | 8 | 8 | 0 | 260 | 152 | 170 | 165 |
| Comparative Example 2 | Propylene-based polymer composition C11 | 8 | 8 | 6.5 | 260 | 152 | 170 | 165 |
| Comparative Example 3 | Propylene-based polymer composition C11 | 8 | 8 | 19.5 | 260 | 152 | 170 | 165 |
| Comparative Example 4 | Propylene-based polymer intermediate composition 1 | 5 | 8 | 13 | 260 | 152 | 170 | 165 |
| Comparative Example 5 | Propylene-based polymer intermediate composition 1 | 9 | - | - | 260 | 152 | - | - |
| Comparative Example 6 | Propylene-based polymer composition C11 | 5 | 8 | 19.5 | 260 | 152 | 170 | 165 |
| Comparative Example 7 | Propylene-based polymer composition C12 | Simultaneous biaxial stretching (2 times → 6.5 times) | | - | 250 | - | 140 | 160 |

[Table 3]

| | $BO^{MD}$ $-BO^{TD}$ (-) | $I_{0.2}{}^{MD}/I_{0.6}{}^{TD}$ (-) | $I_{0.2}{}^{TD}/I_{0.6}{}^{MD}$ (-) | Diffraction peak of (040) plane of $\alpha$-crystal (°) | Int_1/Int_2 (-) | $0.5 \times$ (Int_A/Int_B)/Int_2 (-) |
|---|---|---|---|---|---|---|
| Example 1 | -0.12 | 1.26 | 0.92 | 16.89 | 1.7 | 1.5 |
| Example 2 | -0.26 | 1.10 | 0.90 | 16.91 | 2.0 | 1.6 |
| Example 3 | -0.32 | 1.28 | 0.81 | 16.93 | 2.1 | 1.7 |
| Example 4 | -0.18 | 0.89 | 0.81 | 16.87 | 2.1 | 1.7 |
| Comparative Example 1 | -0.61 | 2.65 | 0.56 | 16.72 | 4.4 | 2.7 |
| Comparative Example 2 | -0.53 | 2.22 | 0.54 | 16.80 | 3.9 | 2.2 |
| Comparative Example 3 | -0.39 | 1.24 | 0.60 | 16.85 | 2.5 | 1.8 |
| Comparative Example 4 | -0.64 | 1.26 | 0.76 | 16.93 | 6.3 | 3.8 |
| Comparative Example 5 | 1.29 | 1.71 | 1.06 | Unmeasurable | Unmeasurable | Unmeasurable |
| Comparative Example 6 | -0.55 | 1.09 | 1.70 | 16.85 | 5.0 | 3.1 |
| Comparative Example 7 | -0.01 | 1.75 | 1.40 | 16.94 | 1.0 | 1.0 |

*Unmeasurable: the film was not stretched in the TD direction and therefore could not be measured.

[Table 4]

| | Young's modulus (GPa) | | Relative standard deviation of gauge-line gaps (%) | Heat shrinkage rate (%) | |
|---|---|---|---|---|---|
| | MD | TD | | MD | TD |
| Example 1 | 3.8 | 4.5 | 6.8 | 6.3 | 3.1 |
| Example 2 | 4.1 | 5.8 | 6.4 | 6.1 | 4.5 |
| Example 3 | 4.1 | 5.9 | 5.3 | 6.9 | 5.9 |
| Example 4 | 3.2 | 4.1 | 4.4 | 6.8 | 3.3 |
| Comparative Example 1 | 2.7 | 6.1 | 9.4 | 6.1 | 17.6 |
| Comparative Example 2 | 2.6 | 5.2 | 6.3 | 6.8 | 15.2 |
| Comparative Example 3 | 2.8 | 4.4 | 5.8 | 6.1 | 4.5 |
| Comparative Example 4 | 2.6 | 5.7 | 3.8 | 4.4 | 6.5 |
| Comparative Example 5 | 4.6 | 1.7 | Unmeasurable | No data | No data |
| Comparative Example 6 | 2.6 | 4.7 | 6.3 | 3.8 | 2.8 |

(continued)

| | Young's modulus (GPa) | | Relative standard deviation of gauge-line gaps (%) | Heat shrinkage rate (%) | |
|---|---|---|---|---|---|
| | MD | TD | | MD | TD |
| Comparative Example 7 | 2.7 | 3.2 | 18.9 | 6.9 | 6.3 |

*Unmeasurable: the film was not stretched in the TD direction and therefore could not be measured.

*No data: the film was not stretched in the TD direction and therefore could not be measured accurately.

<Hydrocarbon resin masterbatch>

In 50 parts by weight of the propylene-based polymer intermediate composition 3 were blended 50 parts by weight of Oppera PR100A (cyclopentadiene-based hydrocarbon resin, manufactured by EXXon Mobil Corporation), 0.01 parts by mass of DHT-4C (neutralizer, manufactured by Kyowa Chemical Industry Co., Ltd.), 0.09 parts by mass of IRGANOX 1010 (antioxidant, manufactured by BASF Japan Ltd.), and 0.05 parts by mass of SUMILIZER GP (antioxidant, manufactured by SUMITOMO CHEMICAL COMPANY, LIMITED), and then the mixture was melt-extruded to give pellet-shaped hydrocarbon resin masterbatch.

<Propylene-based polymer composition 15>

The propylene-based polymer intermediate composition 1 (70 parts by mass), the propylene-based polymer intermediate composition 3 (10 parts by weight), and the hydrocarbon resin masterbatch (20 part by mass) were mixed to prepare a propylene-based polymer composition 15. Table 5 below shows the values of physical properties of pellets obtained by melt-extruding the propylene-based polymer composition 15.

<Propylene-based polymer composition 16>

The propylene-based polymer intermediate composition 1 (60 parts by mass), the propylene-based polymer intermediate composition 3 (20 parts by weight), and the hydrocarbon resin masterbatch (20 part by mass) were mixed to prepare a propylene-based polymer composition 16. Table 5 below shows the values of physical properties of pellets obtained by melt-extruding the propylene-based polymer composition 16.

<Propylene-based polymer composition C13>

The propylene-based polymer intermediate composition 1 (90 parts by mass) was mixed with Oppera PR100A (10 parts by weight) to prepare a propylene-based polymer composition C13. Table 5 below shows the values of physical properties of pellets obtained by melt-extruding the propylene-based polymer composition C13.

[Table 5]

| Material | MFR (g/10 min) | SR | Mw/Mn | Mz/Mn | Amount of component having molecular weight of 100000 or less (mass%) | Amount of component having molecular weight of 1500000 or more (mass%) | Petroleum resin |
|---|---|---|---|---|---|---|---|
| Propylene-based polymer composition 15 | 4.1 | 1.37 | 4.6 | 15.4 | 34 | 3.1 | PR100A 10 mass% |
| Propylene-based polymer composition 16 | 4.4 | 1.44 | 4.9 | 18.5 | 36 | 3.3 | PR100A 10 mass% |

(continued)

| Material | MFR (g/10 min) | SR | Mw/Mn | Mz/Mn | Amount of component having molecular weight of 100000 or less (mass%) | Amount of component having molecular weight of 1500000 or more (mass%) | Petroleum resin |
|---|---|---|---|---|---|---|---|
| Propylene-based polymer composition C13 | 3.5 | 1.20 | 3.6 | 9.7 | 27 | 2.6 | PR100A 10 mass% |

<Example 5>

The propylene-based polymer composition 15 was heat-melted at a resin temperature of 250°C, using a T-die film forming machine equipped with an extruder having a screw diameter of 20 mmφ, and extruded onto a cooling roll at 40°C to give an unstretched sheet having a thickness of 0.5 mm. While the obtained unstretched sheet had four sides thereof held with chucks, the unstretched sheet was preheated for 3 minutes in a heating furnace heated to 155°C, then stretched by 7 times in the MD direction, and then stretched by 8 times in the TD direction to give a biaxially stretched film. Tables 6 and 7 below show the production conditions and the measurement values of physical properties of the obtained biaxially stretched film.

<Example 6>

A biaxially stretched film was obtained under the conditions totally the same as in Example 5 except for replacing the propylene-based polymer composition 15 in Example 5 with the propylene-based polymer composition 16. Tables 6 and 7 below show the production conditions and the measurement values of physical properties of the obtained biaxially stretched film.

<Comparative Example 8>

A biaxially stretched film was obtained under the conditions totally the same as in Example 5 except for replacing the propylene-based polymer composition 15 in Example 5 with the propylene-based polymer composition C13. Tables 6 and 7 below show the production conditions and the measurement values of physical properties of the obtained biaxially stretched film.

Table 7 below clarifies the fact that the biaxially stretched films of the examples have a Young's modulus in both the MD and TD directions that is about the same as, a better test result of uniform stretchability than, and a smaller heat shrinkage rate in the TD direction than those of the biaxially stretched film of the comparative example. That is, it is found that the biaxially stretched films of the examples have excellent toughness, stretchability, and high-temperature dimensional stability.

[Table 6]

| | Material | Stretch ratio | | Resin temperature (°C) | Roll temperature (°C) | In-furnace temperature 1 (°C) | In-furnace temperature 2 (°C) |
|---|---|---|---|---|---|---|---|
| | | MD | TD | | | | |
| Example 5 | Propylene-based polymer composition 15 | 7 | 8 | 250 | - | 155 | 155 |
| Example 6 | Propylene-based polymer composition 16 | 7 | 8 | 250 | - | 155 | 155 |
| Comparative Example 8 | Propylene-based polymer composition C13 | 7 | 8 | 250 | - | 155 | 155 |

[Table 7]

| | Young's modulus (GPa) | | Relative standard deviation of gauge-line gaps (%) | Heat shrinkage rate (%) | |
|---|---|---|---|---|---|
| | MD | TD | | MD | TD |
| Example 5 | 4.3 | 6.2 | 21 | 4.4 | 8.7 |
| Example 6 | 4.3 | 6.1 | 26 | 4.9 | 8.3 |
| Comparative Example 8 | 4.1 | 7.1 | 23 | 5.0 | 10.2 |

INDUSTRIAL APPLICABILITY

The present invention can provide a film having a relatively high tensile modulus of elasticity (Young's modulus) in both a MD direction and a TD direction, having relatively excellent high-temperature dimensional stability in the TD direction, and having relatively excellent uniform stretchability in the TD direction during production. The present invention can also provide a method for producing this film, and a propylene-based polymer composition used for producing this film.

**Claims**

1. A film comprising a propylene-based polymer or a propylene-based polymer composition and satisfying requirements (1) to (3) below:

(1) satisfying an inequality (I) below,

$$-0.35 < BO^{MD} - BO^{TD} < 1.00 \quad (I)$$

wherein

$BO^{MD}$ represents a degree of orientation in a MD direction of the film measured using a birefringence method, and
$BO^{TD}$ represents a degree of orientation in a TD direction of the film measured using the birefringence method;

(2) satisfying an inequality (II) below,

$$I_{0.2}^{MD}/I_{0.6}^{TD} < 1.5 \quad (II)$$

wherein

$I_{0.2}^{MD}$ represents an intensity at a position of a scattering vector q of 0.2 nm$^{-1}$ in a Kratky plot in the MD direction of the film measured using a small-angle X-ray scattering method, and
$I_{0.6}^{TD}$ represents an intensity at a position of a scattering vector q of 0.6 nm$^{-1}$ in a Kratky plot in the TD direction of the film measured using the small-angle X-ray scattering method; and

(3) satisfying an inequality (III) below,

$$I_{0.2}^{TD}/I_{0.6}^{MD} < 1.5 \quad (III)$$

wherein

$I_{0.2}^{TD}$ represents an intensity at a position of the scattering vector q of 0.2 nm$^{-1}$ in the Kratky plot in the TD direction of the film measured using the small-angle X-ray scattering method, and
$I_{0.6}^{MD}$ represents an intensity at a position of the scattering vector q of 0.6 nm$^{-1}$ in the Kratky plot in the MD direction of the film measured using the small-angle X-ray scattering method.

2. The film according to claim 1, further satisfying a requirement (4) below:

(4) satisfying an inequality (IV) below,

$$Int\_1/Int\_2 > 1.1 \ (IV)$$

wherein
Int_1 represents a peak-top intensity in the TD direction of a (110) plane of an $\alpha$-crystal in the propylene-based polymer in a two-dimensional scattering image of the film measured using a wide-angle X-ray scattering method, and
Int_2 represents a peak-top intensity at 45° from the TD direction of the (110) plane of the $\alpha$-crystal in the propylene-based polymer in the two-dimensional scattering image of the film measured using the wide-angle X-ray scattering method.

3. The film according to claim 1 or 2, further satisfying a requirement (5) below:
(5) a diffraction peak of a (040) plane of the $\alpha$-crystal in the propylene-based polymer measured using a wide-angle X-ray diffraction method is at 16.81° or more.

4. The film according to any one of claims 1 to 3, further satisfying a requirement (6) below:

(6) satisfying an inequality (V) below,

$$0.5 \times (Int\_A + Int\_B)/Int\_C > 1.1 \ (V)$$

wherein,
Int_A represents the peak-top intensity in the TD direction of the (110) plane of the $\alpha$-crystal in the propylene-based polymer in the two-dimensional scattering image of the film measured using the wide-angle X-ray scattering method,
Int_B represents a peak-top intensity in the MD direction of the (110) plane of the $\alpha$-crystal in the propylene-based polymer in the two-dimensional scattering image of the film measured using the wide-angle X-ray scattering method, and
Int_C represents the peak-top intensity at 45° from the TD direction of the (110) plane of the $\alpha$-crystal in the propylene-based polymer in the two-dimensional scattering image of the film measured using the wide-angle X-ray scattering method.

5. A method for producing a film, the method comprising:

an extruding step of, with an extruder, heat-melting and extruding onto a cooling roll a propylene-based polymer composition containing a propylene-based polymer and at least one stretchability improving agent selected from the group consisting of a $\beta$-crystal nucleating agent and a hydrocarbon resin, to give an unstretched sheet;
a MD stretching step of stretching the unstretched sheet obtained, with a stretching roll, by 6 times to 10 times in a MD direction to give a uniaxially stretched sheet;
a TD stretching step of stretching the uniaxially stretched sheet obtained, with chucks arranged in two rows along the MD direction, in a heating furnace, by 4 times to 20 times in a TD direction to give a biaxially stretched film; and
a relaxing step of relaxing a stretch in the TD direction of the biaxially stretched film obtained, with the chucks arranged in two rows along the MD direction, in the heating furnace, by 16% to 30% in the TD direction.

6. A propylene-based polymer composition comprising a propylene-based polymer and a stretchability improving agent, and
satisfying requirements (11) to (16) below:

(11) a melt flow rate measured at a temperature of 230°C and a load of 2.16 kg is 1 g/10 min to 10 g/10 min;

(12) a die swell ratio measured at a temperature of 230°C and a load of 2.16 kg is 1.23 to 1.45;

(13) a ratio (Mw/Mn) between a weight average molecular weight (Mw) and a number average molecular weight (Mn) measured by gel permeation chromatography is 4.0 to 7.0;

(14) a ratio (Mz/Mn) between a Z-average molecular weight (Mz) and the number average molecular weight (Mn) measured by the gel permeation chromatography is 10.0 to 25.0;

(15) an amount of a component having a molecular weight measured by the gel permeation chromatography of 100000 or less is 30 mass% to 50 mass%; and

(16) an amount of a component having a molecular weight measured by the gel permeation chromatography of 1500000 or more is 2.3 mass% to 5.0 mass%.

7. The propylene-based polymer composition according to claim 6, wherein the stretchability improving agent is at least one selected from the group consisting of a β-crystal nucleating agent and a hydrocarbon resin.

## INTERNATIONAL SEARCH REPORT

International application No.

**PCT/JP2022/002029**

### A. CLASSIFICATION OF SUBJECT MATTER

*C08J 5/18*(2006.01)i; *B29C 55/14*(2006.01)i; *B29K 23/00*(2006.01)n; *B29L 7/00*(2006.01)n
FI: C08J5/18 CES; B29C55/14; B29K23:00; B29L7:00

According to International Patent Classification (IPC) or to both national classification and IPC

### B. FIELDS SEARCHED

Minimum documentation searched (classification system followed by classification symbols)

C08J5/18; B29C55/14; B29D7/01; B32B27/32; B29K23/00; B29L7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-102203 A (TORAY INDUSTRIES) 02 June 2016 (2016-06-02) entire text, in particular, paragraphs [0035]-[0039], [0050]-[0060] | 5 |
| A | JP 2016-195250 A (OJI HOLDINGS CORP) 17 November 2016 (2016-11-17) entire text | 1-7 |
| A | WO 2015/012324 A1 (TOYOBO CO., LTD.) 29 January 2015 (2015-01-29) entire text | 1-7 |
| A | JP 2003-105102 A (TORAY INDUSTRIES) 09 April 2003 (2003-04-09) entire text | 1-7 |
| A | JP 2004-160689 A (TORAY INDUSTRIES) 10 June 2004 (2004-06-10) entire text | 1-7 |
| A | JP 2006-143995 A (TORAY INDUSTRIES) 08 June 2006 (2006-06-08) entire text | 1-7 |
| A | JP 2006-095954 A (SUMITOMO CHEMICAL CO LTD) 13 April 2006 (2006-04-13) entire text | 1-7 |

☑ Further documents are listed in the continuation of Box C.     ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 March 2022** | **22 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/002029**

**C.      DOCUMENTS CONSIDERED TO BE RELEVANT**

| Category* | Citation of document, with indication, where appropriate, of the relevant passages | Relevant to claim No. |
|---|---|---|
| P, A | JP 2021-161381 A (SUMITOMO CHEMICAL CO LTD) 11 October 2021 (2021-10-11) entire text | 1-7 |

Form PCT/ISA/210 (second sheet) (January 2015)

**INTERNATIONAL SEARCH REPORT**
Information on patent family members

International application No.

**PCT/JP2022/002029**

| Patent document cited in search report | | | Publication date (day/month/year) | Patent family member(s) | Publication date (day/month/year) |
|---|---|---|---|---|---|
| JP | 2016-102203 | A | 02 June 2016 | (Family: none) | |
| JP | 2016-195250 | A | 17 November 2016 | (Family: none) | |
| WO | 2015/012324 | A1 | 29 January 2015 | KR 10-2016-0034302 A<br>TW 201510034 A | |
| JP | 2003-105102 | A | 09 April 2003 | (Family: none) | |
| JP | 2004-160689 | A | 10 June 2004 | (Family: none) | |
| JP | 2006-143995 | A | 08 June 2006 | (Family: none) | |
| JP | 2006-095954 | A | 13 April 2006 | (Family: none) | |
| JP | 2021-161381 | A | 11 October 2021 | (Family: none) | |

Form PCT/ISA/210 (patent family annex) (January 2015)

**REFERENCES CITED IN THE DESCRIPTION**

**Patent documents cited in the description**

- JP 2016199686 A
- JP 61218606 A
- JP 61287904 A
- JP 7216017 A
- JP 2004182876 A

**Non-patent literature cited in the description**

- Introduction to higher-order structural analysis of plastic molded article. THE NIKKAN KOGYO SHIM-BUN, LTD, 2006, 72-74